(19) Europäisches Patentamt
European Patent Office
Office européen des brevets

(11) Veröffentlichungsnummer: **0 109 624**
**B1**

(12) **EUROPÄISCHE PATENTSCHRIFT**

(45) Veröffentlichungstag der Patentschrift: **30.01.91**

(51) Int. Cl.$^5$: **C 08 G 18/32**

(21) Anmeldenummer: **83111278.4**

(22) Anmeldetag: **11.11.83**

# (54) Verfahren zur Herstellung von gegebenenfalls zelligen Polyurethan-Polyharnstoff-Formkörpern.

(30) Priorität: **18.11.82 DE 3242559**

(43) Veröffentlichungstag der Anmeldung:
**30.05.84 Patentblatt 84/22**

(45) Bekanntmachung des Hinweises auf die Patenterteilung:
**30.01.91 Patentblatt 91/05**

(84) Benannte Vertragsstaaten:
**AT BE CH DE FR GB IT LI NL SE**

(56) Entgegenhaltungen:
**EP-A-0 026 915**
**DE-A-2 233 080**
**DE-B-2 622 951**

(73) Patentinhaber: **BASF Aktiengesellschaft**
**Carl-Bosch-Strasse 38**
**D-6700 Ludwigshafen (DE)**

(72) Erfinder: **Nissen, Dietmar, Dr.**
**Ziegelhaeuser Landstrasse 31**
**D-6900 Heidelberg (DE)**
Erfinder: **Neumann, Peter, Dr.**
**Franz-Schubert-Strasse 1**
**D-6908 Wiesloch (DE)**

**EP 0 109 624 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Herstellung von vernetzten Kunststoffen nach dem Isocyanat-Polyadditionsverfahren ist bekannt. Nach Angaben der DE—AS 11 96 864 (US 3 099 516) werden hierzu Hydroxylgruppen aufweisende Verbindungen und Polyisocyanate in Gegenwart von Treibmitteln und Katalysatoren in Formen verschäumt.

Bei geeigneter Wahl der Hydroxylgruppen aufweisenden Polyester, Polyether, Polyesteramide u.a. und organischen Polyisocyanate sowie durch zusätzliche Mitverwendung von Kettenverlängerungsmitteln, wie Glykolen oder Diaminen, können nach dieser Methode sowohl elastische wie starre Polyurethane sowie alle dazwischen liegenden Modifikationen hergestellt werden.

Zur Herstellung der Polyurethanelastomeren werden nach DE—PS 831 604 (US 2 778 810) aus den hydroxylgruppenhaltigen Verbindungen und Polyisocyanaten zunächst NCO-Gruppen haltige Präpolymere hergestellt, die dann in einer zweiten Stufe mit dem Kettenverlängerungsmittel zum hochmolekularen Elastomeren umgesetzt werden.

Diamine als Kettenverlängerungsmittel konnten im allgemeinen nich nach dem one-shot-Verfahren verarbeitet werden. Nach Angaben der DE—AS 11 49 523 (US 3 105 062) werden den flüssigen, NCOgruppenhaltigen Präpolymeren kristalline aromatische diprimäre Diamine in einer zur Absättigung der Isocyanatgruppen unzureichenden Menge bei einer unter dem Schmelzpunkt der Diamine liegenden Temperatur einverleibt und danach die Massen durch Wärmezufuhr ausgehärtet. Gemäß DE—PS 12 40 654 (US 3 428 610) werden die NCO-Gruppen haltigen Präpolymeren bei Raumtemperatur oder mäßig erhöhten Temperaturen mit solchen flüssigen oder gelösten aromatischen Diaminen umgesetzt, die in ortho-Stellung zur ersten Aminogruppe mindestens einen linearen Alkylsubstituenten und zur zweiten Aminogruppe zwei lineare Alkylsubstituenten mit 1 bis 3 C-Atomen aufweisen.

Ein Verfahren zur Herstellung von gegebenenfalls zelligen, elastischen Formkörpern mit einer geschlossenen Oberflächenschicht aus Polyurethan-Polyharnstoff-Elastomeren nach dem Prinzip der Reaktionsspritzgußtechnik (RIM) wird in der DE—AS 26 22 951 (US 4 218 543) beschrieben. Die genannten Systeme bestehen im wesentlichen aus organischen Polyisocyanaten, Polyolen, aktiven aromatisches Di- bzw. Polyamine, die in o-Stellung zur Aminogruppe durch Alkylgruppen substituiert sind und starken Katalysatoren für die Reaktion zwischen Hydroxyl- und Isocyanatgruppen. Wesentlich hierbi ist, daß die aromatischen Di- bzw. Polyamine in jedem Verhältnis mit Polyolen des Molekulargewichts 1200 bis 1800 mischbar sind, die Alkylsubstituenten 1 bis 3 Kohlenstoffatome aufweisen, wobei mindestens zwei der Alkylsubstituenten 2 bis 3 Kohlenstoffatome besitzen und jede der ortho-Stellungen zu den Aminogruppen substituiert ist. Derartige Systeme besitzen Startzeiten bis herab zu weniger als einer Sekunde; der Übergang der flüssigen in die feste Phase erfolgt nahezu schlagartig, was dazu führt, daß das flüssig Reaktionsgemisch in der Form an deren Wandungen gleichsam erstarrt.

Es ist ferner bekannt, daß die Reaktivität von aromatisch gebundenen Aminogruppen gegenüber Isocyanaten durch elektronenanziehende Substituenten stark vermindert werden kann. Beispiele für derartige aromatische Diamine sind nach DE—PS 12 16 538 (GB—PS 981 935) 3,3'-Dichlor-4,4'-diamino-diphenylmethan, 3,3'-Dinitro-4,4'-diamino-diphenylmethan und 3,3'-Dichlor-4,4'-diamino-diphenyl, deren Verarbeitung aus gesundheitsschädlichen Bedenken aufwendige und erschwerende Auflagen erfordert. Durch die stark elektronegativen Substituenten dieser Verbindungen wird jedoch die Reaktivität der aromatisch gebundenen Aminogruppen so stark herabgesetzt, daß die Durchhärtung bei nach der Reaktionsspritzgußtechnik hergestellten Formkörpern bis zu 15 Minuten erfordert und damit unwirtschaftlich wird.

Polyurethan-Polyharnstoff-Formulierungen mit im Vergleich zu Systemen gemäß DE—AS 26 22 951 etwas verminderter Reaktivität und dadurch verbeserter Fließfähigkeit werden nach Angaben der EP—OS 26 915 erhalten, wenn man als aromatische Diamine 3,3',5,5'-tetraalkylsubsituierte 4,4'-Diaminodiphenylmethane verwendet, in denen die Alkylreste gleich oder verscheiden sind und einen Methyl-, Ethyl-, Isopropyl-, sek.- oder tert.-Butylrest bedeuten, wobei mindestens einer der Substituenten ein Isopropyl- oder sek.-Butylrest sein muß. Die beschriebenen tetraalkylsubstituierten Diaminodiphenylmethane sind mit den Polyolen in den erforderlichen Mengen bei Raumtemperatur sehr gut mischbar und zeigen nur eine geringe oder gar keine Kristallisationsneigung, so daß die Formulierungen under den für konventionelle RIM-Systeme üblichsen Bedingungen gut handhabbar sind. Es zeigte sich jedoch auch, daß die beschriebenen tetraalkylsubstituierten 4,4'-Diamino-diphenylmethane für spezielle Anwendungen zu wenig reaktiv sein können.

Im Vergleich zu EP—OS 26 915 etwas reaktivere Polyurethan-Polyharnstoff-Formulierungen werden in der EP—OS 69 286 beschrieben. Als aromatische Diamine verwendet werden trialkylsubstituierte meta-Phenylendiamine, wobei zwei der Alkylsubstituenten gleich oder verschieden und lineare oder verzweigte Alkylreste mit 1 bis 4 C-Atomen sind und der 3. Alkylrest 4 bis 12 C-Atome aufweist oder ein fünf- oder sechsgliedriger Cycloalkylrest ist. Die Formulierungen weisen selbst bei einem relativ hohen Gehalt an Diaminen eine ausreichende Fließfähigkeit auf und ergeben Formkörper mit einer hohen Wärmeformbeständigkeit, die keinen progressiven Abfall der Schubmodulkurven zwischen 100 und 200°C zeigen.

Aber selbts mit dieser Vielzahl an bereits beschriebenen aromatischen Diaminoverbindungen konnten

nicht alle Forderungen des Marktes hinsichtlich der Reaktivität der Formulierungen, der Verarbeitbarkeit, der mechanischen Eigenschaften der erhaltenen Formkörpern und deren Durchhärtung befriedigt werden.

Aufgabe der vorliegenden Erfindung war es Polyurethansystem zu entwickeln, die ebenfalls nach der Methode der Reaktionsspritzgußtechnik (RIM = reaction injection moulding) verarbeitet werden können und eine individuelle Anpassung der Verfahrensparameter an die maschinellen Gegebenheiten gestatten.

Die Systeme sollten im vergleich zu solchen gemäß DE—AS 26 22 951 weniger reaktiv, jedoch reaktiver sein als beispielsweise 3,3'-Dichlor-4,4'-diaminodiphenylmethan enthaltende. Nicht erforderlich was hingegen, daß die Diamine in jedem Verhältnis mit den Polyolen mischbar sind, wobei sie jedoch unter Verarbeitungsbedingungenen ausreichend löslich sein müsses.

Die Systeme sollten ferner bei einem relativ hohen Gehalt an Diaminen eine ausreichende Fleißfähigkeit besitzen.

Diese Aufgabe konnte gelöst werden durch ein Verfahren zur Herstellung von kompakten oder zelligen Polyurethan-Polyharnstoff-Formkörpern durfch Umsetzung von

(A) organischen Polyisocyanaten,

(B) Polyolen und

(C) aromatischen Diaminen,

oder Mischungen aus

(C) aromatischen Diaminen und

($D_1$) Kettenverlängerungsmitteln, ($D_2$) sek. aromatischen Diaminen, alkylsubstituierten Phenylendiaminen und/oder alkylsubstituierten 4,4'-Diamino-diphenylmethanen in Gegenwart von (E) Katalysatoren sowie gegebenenfalls (F) Treibmitteln, Hilfs- und Zusatzstoffen, das dadurch gekennzeichnet ist, daß man als aromatische Diamine (C) verwendet:

Diaminoazobenzole oder Diaminoazopyridine der Formeln

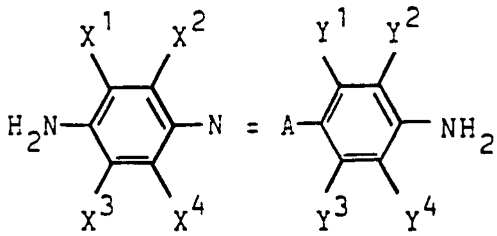

(I)

in der die Substituenten $X^1$ bis $X^4$ und $Y^1$ bis $Y^4$ gleich oder verschieden sind und bedeuten:

ein Wasserstoffatom,

einen linearen oder verzweigten Alkylrest mit 1 bis 6 Kohlenstoffatomen, vorzugsweise 1 bis 4 Kohlenstoffatomen,

einen linearen oder verzweigten Alkoxyrest mit 1 bis 12 Kohlenstoffatomen, vorzugsweise 1 bis 6 Kohlenstoffatomen,

einen linearen oder verzweigten Alkoxycarbonylrest mit 1 bis 12 Kohlenstoffatomen, vorzugsweise 1 bis 6 Kohlenstoffatomen,

einen linearen oder verzweigten Alkylsulfonylrest mit 1 bis 12 Kohlenstoffatomen, vorzugsweise 1 bis 6 Kohlenstoffatomen,

mit der Maßgabe, daß mit Ausnahme von Wasserstoff oder dem Methylrest nicht mehr als zwei gleichartige Reste in einem Phenylenrest gebunden sind oder

$X^1$ und $X^2$ sowie $Y^1$ und $Y^2$ zusammen einen ankondensierten Benzolkern bilden, wobei die übrigen Substituenten $X^3$, $X^4$, $Y^3$ und $Y^4$ die oben genannte Bedeutung haben, und

A ein Stickstoffatom oder eine N—O—Gruppe ist,

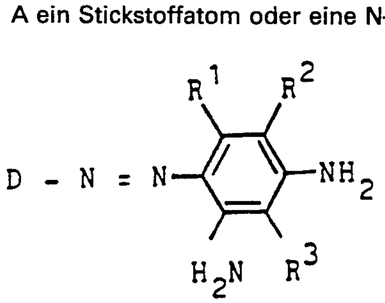

oder

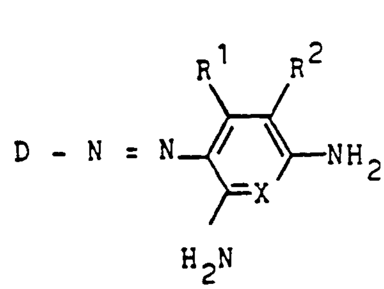

,

(II) (III)

in denen die Substituenten $R^1$, $R^2$ und $R^3$ gleich oder verschieden sind und bedeuten:

ein Wasserstoffatom,

einen linearen oder verzweigten Alkylrest mit 1 bis 4 Kohlenstoffatomen, vorzugsweise 1 bis 2 Kohlenstoffatomen,

einen linearen oder verzweigten Alkoxyrest mit 1 bis 8 Kohlenstoffatomen, vorzugsweise 1 bis 4 Kohlenstoffatomen,

oder einer der Reste $R^1$ bis $R^3$

eine Phenylgruppe,

einen Cycloalkylrest mit 3 bis 7 Kohlenstoffatomen, vorzugsweise 6 Kohlenstoffatomen,

einen Alkoxycarbonylrest mit 1 bis 4 Kohlenstoffatomen,

einen Alkylcarbonylrest mit 1 bis 4 Kohlenstoffatomen,

einen Benzoyl-,

Carbamoyl-,

Einen N-Akyl- oder N,N,-Dialkylcarbamoylrest mit 1 bis 4 Kohlenstoffatomen,

wobei die übrigen Reste $R^1$ bis $R^3$ eine Wasserstoffatom, ein Alkyl- oder Alkoxyrest mit der oben genannten Bedeutung sind,

D ein aromatischer Rest der Benzolreihe oder ein schwefel- und/oders stickstoffhaltiger heterocyclischer Rest und

X Stickstoff oder eine N—O—Gruppe sind,

und die vorgenannten Aufbaukomponenten bei einer Temperatur von 15 bis 140°C in solchen Mengen zur Umsetzung bringt, daß das Verhältnis von NCO-Gruppen zu Zerewitinoff aktiven Wasserstoffatomen, gebunden an OH—, $H_2N$— und RHN-Gruppen, 1:0,90 bis 1,25 beträgt.

Durch eine geeignete Wahl der Substituenten kann nicht nur die Reaktivität der Diaminoazobenzole, -pyridine oder deren Oxide gesteuert und dadurch den örtlichen maschinellen Gegebenheiten angepaßt weden, sondern die Formkörper können auch gleichzeitig in Masse gefärbt werden.

Zu den für das erfindungsgemäße Verfahren verwendbaren Ausgangskomponenten ist folgendes auszuführen:

Als Polyisocyanate (A) kommen aliphatische, cycloaliphatische, araliphatische und vorzugsweise aromatische mehrwertige Isocyanate in Frage. Im einzelnen seien beispielhaft genannt: Alkylendiisocyanate mit 4 bis 12 Kohlenstoffatomen im Alkylenrest, wie 1,12-Dodecandiisocyanat, Tetramethylendiisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat) 2,4- und 2,6-Hexahydrotoluylen-diisocyanat sowie entsprechende Isomerengemische, 4,4'-, 2,2'- und 2,4'-Dicyclohexylmethan-diisocyanat sowie die entsprechenden Isomerengemische und vorzugsweise aromatische Di- und Polyisocyanate wie 4,4'-, 2,4'- und 2,2'-Diisocyanato-diphenylmethan and die entsprechenden Isomerengemische, 2,4- und 2,6-Diisocyanato-toluol und die entsprechenden Isomerengemische, 1,5-Diisocyanato-naphthalin, Polyphenyl-polymethylenpolyisocyanate, 2,4,6-Triisocyanato-toluol und vorzugsweise Gemische aus Diphenylmethan-diisocyanaten und Polyphenyl-polymethylen-polyisocyanaten (Roh-MDI). Die genannten Di- und Polyisocyanate können einzeln oder in Form von Mischungen eingesetzt werden.

Häufig werden auch sogenannte modifizierte mehrwertige Isocyanate, d.h. Produkte die durch chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäß DE—PS 10 92 007, Allophanatgruppen aufweisende Polyisocyanate, wie sie z.B. in der britischen Patentschrift 994 890, den ausgelegten Unterlagen des belgischen Patents 761 626 und der NL—OS 71 02 524 beschreiben werden, Isocyanuratgruppen aufweisende Polyisocyanate wie sie z.B. in den DE—PS 10 22 789, 12 22 067 und 10 27 394 sowie den DE—OS 19 29 034 und 20 04 048 beschrieben werden, Urethangruppen aufweisende Polyisocyanate, wie siz z.B. inden ausgelegten Unterlagen des belgischen Patents 752 261 oder der US—PS 33 94 164 beschrieben werden, acylierte Harnstoffgruppen aufweisene Polyisocyanate, z.B. gemäß DE—PS 12 30 778, Biuretgruppen aufweisende Polyisocyanate, z.B. gemäß DE—PS 11 01 394 und GB—PS 889 050; durch Telomerisationsreaktionen hergestellte Polyisocyanate, z.B. entsprechend den ausgelegten Unterlagen des belgischen Patents 723 640, Estergruppen aufweisende Polyisocyanate, wie sie z.B. in der GB—PS 965 474 und 10 72 956, der US—PS 35 67 765 und der DE—PS 12 31 688 genannt werden.

Vorzugsweise kommen jedoch zur Anwendung: urethangruppenhaltige Polisocyanate, beispielsweise mit niedermolekularen Diolen, Triolen oder Polypropylen- und/oder Polyethylenglykolen modifiziertes 4,4'-Diphenylmethandiisocyanat oder Toluylen-diisocyanat, Carbodiimidgruppen und/oder Isocyanuratringe enthaltende Polyisocyanate, z.B. auf Diphenylmethan-diisocyanat und/oder Toluylendiisocyanat-Basis und insbesondere Toluylendiisocyanate, Diphenylmethan-diisocyanate, Mischungen aus Diphenylmethan-diisocyanaten und Polyphenyl-polymethylen-polyisocyanaten (Roh—MDI) und Gemische aus Toluylendiisocyanaten und Roh—MDI.

Als Polyole (B) werden bei dem erfindungsgemäßen Verfahren vorzugsweise übliche lineare und/oder verzweigte, d.h. di- bis tetrafunktionelle, vorzugsweise di- und trifunktionelle Polyesterole und insbesondere Polyetherole mit Molekulargewichten von 1000 bis 8000 und vorzugsweise 1800 bis 7000, verwendet. In Betracht kommen jedoch auch andere hydroxylgruppenhaltige Polymere mit den genannten Molekulargewichten, beispielsweise Polyesteramide, Polyacetale, wie z.B. Polyoxymethylene und Butandiol-formale, und Polycarbonate, insbesondere solche, hergestellt aus Diphenylcarbonat und Hexandiol-1,6 durch Umesterung.

Geeignete Polyesterole können beispielsweise aus Dicarbonsäuren, vorzugsweise aliphatischen Dicarbonsäure, mit 2 bis 12, vorzugsweise 4 bis 8 Kohlenstoffatomen im Alkylenrest und mehrwertigen Alkoholen, vorzugsweise Diolen hergestellt werden. Genannt seien beispielhaft aliphatische Dicarbonsäuren, wie Bernsteinsäure, Glutarsäure, Pimelinsäure, Undecandisäure, Dodecandisäure und vorzugsweise Adipinsäure und aromatische Dicarbonsäuren, wie Phthalsäure und Terephthalsäure. Beispiele für zwei- und mehrwertige, insbesondere zweiwertige Alkohole sind: 1,2- bzw. 1,3-Propylenglykol, Dipropylenglykol, 1,5-Pentamethylenglykol, 1,6-Hexamethylenglykol, 1,10-Decamethylenglykol, Glycerin, Trimethylolpropan und vorzugsweise Ethylenglykol, Diethylenglycol und 1,4-Butylenglykol. Als mehrwertige Alkohole können ferner Alkanolamine, wie Triethanolamin und Triisopropanolamin verwendet werden. Sofern zur Herstellung der Polyesterole polyfunktionelle, insbesondere trifunktionelle Verbindungen mitverwendet werden, muß deren Gehalt so gewählt werden, daß die Funktionalität der erhaltenen Polyesterole maximal 3,5, vorzugsweise 2 bis 3,0 ist.

Bewährt haben sich auch Polyesterole, die durch Polykondensation eines Dicarbonsäuregemisches, das bezogen auf das Gesamtgewicht der genannten Dicarbonsäuren enthält: 20 bis 35 Gew.%, vorzugsweise 28 bis 33 Gew.% Bernsteinsäure, 35 bis 50 Gew.%, vorzugsweise 40 bis 45 Gew.% Glutarsäure und 20 bis 32 Gew.%, vorzugsweise 24 bis 28 Gew.% Adipinsäure und Alkoholmischungen aus Ethylenglykol/1,4-Butandiol, Ethylenglykol/Diethylenglykol, Ethylenglykol/Trimethylolpropan, Diethylenglykol/Trimethylolpropan, Ethylenglykol/Triisopropanolamin, Diethylenglykol/Triisopropanolamin und/oder 1,4-Butylen-/1,5-Pentmethylen-/1,6-Hexamethylenglykol erhalten werden.

Die Polyesterole besitzen Molekulargewichte von 100 bis 3000 und vorzugsweise 1800 bis 2500.

Vorzugsweise als Polyole verwendet werden jedoch Polyetherole, die nach bekannten Verfahren aus einem oder mehreren Alkylenoxiden mit 2 bis 4 Kohlenstoffatom im Alkylenrest und einem Startermolekül, das 2 bis 8, vorzugsweise 2 bis 4 aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxide und 1,2-Propylenoxid. Die Alkylenoxide können einzeln, alternierend nacheinander oder als Mischungen verwendet werden. Als Startermoleküle kommen bespielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylenediamine, 2,4- und 2,6-Toluylendiamin und 4,4'-, 2,4'- und 2,2'-Diaminodiphenylmethan. Von den Verbindungen der erwähnten Gruppe sind besonders interessant N,N,N',N'-Tetrakis-(2-hydroxyethyl)-ethylendiamin, N,N,N',N'-Tetrakis-(2-hydroxypropyl)-ethylendiamin, N,N,N',-N'',N''-Pentakis-(2-hydroxypropyl)-diethylentriamin, Phenyldiisopropanolamin und höhere Alkylenoxidaddukte von Anilin.

Als Startermoleküle kommen ferner in Betracht Alkanolamine, wie Ethanolamin, Diethanolamin, N-Methyl- und N-Ethyl-ethanolamin, N-Methyl- und N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethylenglykol, Propylenglykol-1,2 und -1,3, Diethylenglykol, Dipropylenglykol, Butylenglykolk-1,4, Hexamethylenglykol-1,6, Glycerin, Trimethylol-propan und Pentaerythrit.

Andere anwendbare Polyole sind die nicht-reduzierenden Zucker, die nicht-reduzierenden Zuckerderivate und bevorzugt deren Alkylenoxid-Addukte, worin die Alkylenoxide 2 bis 4 Kohlenstoffatome haben. Verwendbare nicht-reduzierbare Zucker und Zuckerderivate sind z.B. Saccarose, Alkylglykoside, wie Methylglykosid und Ethylenglukosid, ferner Glykolglykoside, wie Ethylenglykolglukosid, Propylenglykolglukosid, Glyzeringlukosid und 1,2,6-Hexantriolglukosid.

In Betracht kommen ferner Polyole auf Basis von Polyphenolen und vorzugsweise deren Alkylenoxid-Addukte, in denen die Alkylenoxide 2 bis 4 Kohlenstoffatome besitzen. Anwendbare Polyphenole sind z.B. Bisphenol A, Bisphenol F, Kondensationsprodukte aus Phenol und Formaldehyd, besonders die Novolake, Kondensationsprodukte aus verschiedenen Phenolverbindungen und Acrolein, wobei die einfachsten Substanzen dieser Gruppe die 1,1,3-Tris(hydroxyphenyl)-propane sind, Kondensationsprodukte verschiedener Phenolverbindungen mit Glyoxal, Glutaraldehyd und anderen Dialdehyden wobei die einfachsten Substanzen dieser Gruppe die 1,1,2,2-Tetrakis-(hydroxyphenyl)-ethane sind.

Eine weitere verwendbare Gruppe von Polyolen sind die Alkylenoxid-Addukte, vorzugsweise die Ethylenoxid-, 1,2-Epoxypropan-, Epoxybutan- und deren Mischungen, -Addukte von Kondensationsprodukte aus aromatischem Amin, Phenol und Aldehyd. Die Kondensationsprodukte erhält man durch Kondensieren eines aromatischen Amins, z.B. Anilin oder Toluidin, eines Phenols z.B. Phenol oder Kresol und eines Aldehyds, vorzugsweise Formaldehyd bei erhöhten Temperaturen, z.B. im Bereich von 60 bis 180°C. Das Kondensationsprodukte wird dann isoliert und unter Bildung der Polyole mit einem Alkylenoxid umgesetzt. Besonders erwähnenswert sind die Propylenoxid- und Propylenoxid-Ethylenoxid-Addukte von Anilin/Phenol/Formaldehyd-Kondensationsprodukten.

Die Alkylenoxid-Addukte von Phosphor- und Polyphosphorsäuren sind eine weitere verwendbare Gruppe von Polyolen. Bevorzugte Alkylenoxide sind Ethylenoxid, 1,2-Propylenoxid, die Butylenoxide und Epichlorhydrin. Als Phosphorsäuren sind Phosphorsäure, phosphorige Säure, die Polyphosphorsäuren, wie Tripolyphosphorsäure, und die Polymetaphosphorsäuren günstig.

Die Polyetherole besitzen Molekulargewichte von 2000 bis 8000 und vorzugsweise 2500 bis 7000. Sie können ebenso wie die Polyesterole einzeln oder in Form von Mischungen verwendet werden. Ferner können sie vielfach mit den Polyesterolen, und hydroxylgruppenhaltigen Polyesteramiden, Polyacetalen und Polycarbonaten gemischt werden.

Die erfindungsgemäß verwendbaren Diaminoazobenzole (C), Diaminoazopyridine (C) oder deren N-Oxide besitzen die vorstehand erwähnten Strukturen der Formel (I), (II) oder (III) Besonders bewährt haben sich und daher vorzugsweise verwendet werden solche Verbindungen mit Strukturen der Formel (I), in denen jeweils einer oder zwei der Reste $X^1$ bis $X^4$ und/oder $Y^1$ bis $Y^4$ eine Alkylgruppe mit 1 bis 2 Kohlenstoffatomen und/oder eine Alkoxygruppe mit 1 bis 2 Kohlenstoffatomen und die übrigen Reste Wasserstoffatome sind A ein Stickstoffatom bedeutet.

Die erfindungsgemäß zu verwendeten 4,4'-Diaminoazobenzole der Formel (I) sind bekannt oder sie können nach bekannten Verfahren hergestellt werden. Die Verbindungen können beispielsweise erhalten werden durch Kuppeln der Diazoverbindungen eines monoacylieren, gegebenenfalls substituierten 1,4-Diaminobenzols mit einem gegebenenfalls geschützten und gegebenenfalls substituierten Aminobenzol und Entacylierung der erhaltenen Azoverbindung oder durch Kuppeln der Diazoverbindungen eines 4-Nitroanilins mit einem gegebenenfalls geschützten Aminobenzol und Reduktion der Nitrogruppe in der erhaltenen Azoverbindung. Sie sind außerdem zugänglich durch Oxidation von 4-Nitroaminobenzolen oder von monoacylierten 1,4-Diaminobenzolen und anschließender Reduktion bzw. Entacyclierung. Andere Darstellungsmöglichkeiten bestehen in der Mono- oder gegebenenfalls Dinitrierung von in 4- bzw. 4,4'-Stellung unsubstituierten Azobenzolen und anschließender Reduktion der Nitroverbindungen sowie in der Kondensation von Nitrobenzolen mit Aminobenzolen und gegebenenfalls anschließender Reduktion der Nitrogruppen.

Als Beispiele für 4,4'-Diaminoazobenzole der Formel (I) seien folgende Verbindungen genannt:

4,4'-Diaminoazobenzol, 2-Methyl-, 3-Methyl-, 3-Ethyl-, 3-Isopropyl-, 3-tert.-Butyl-, 3,5-Dimethyl-, 3-Methyl-5-isopropyl-, 3,5-Diethyl-, 3-Ethyl-5-isopropyl-, 2,5-, 2,2'-, 2,3'-, 3,3'-Dimethyl-, 3,3',5-, 3,3',6-Trimethyl-, 2,2',5,5'-, 2,3,5,6-Tetramethyl- und 2,2',3,3',5,5',6,6'-Octamethyl-4,4'-diaminoazobenzol, 3-Methoxy-, 3-Ethoxy-, 3-Isopropoxy-, 3-tert.-Butoxy-, 3-Hexyloxy-, 3-(2-Ethyl)-hexyloxy-, 3-Decyloxy-, 3-Dodecyloxy-, 2,5-, 2,2'-, 2,3'-, 3,3'-Dimethoxy-, 2,2',5-, 2,3',5-Trimethoxy-, 2,2',5,5'-Tetramethoxy-, 2,2',5,5'-Tetraethoxy-4,4'-diaminoazobenzol, 2-Methoxy-2',5'-diethoxy-, 3-Methoxy-2,5'-diethoxy-4,4'-diaminobenzol, 3-Methyl-3'-methoxy-, 2,3'-Dimethyl-5-methoxy-, 2,5-Di-tert.-butyl-3'-methoxy-, 3-Methyl-2',5'-dimethoxy-, 2,5-Dimethyl-2'-methoxy-, 2,5,2'-Trimethyl-5'-methoxy-, 2,5-Dimethyl-2',5'-dimethoxy-, 2-Methyl-2',5',5'-trimethoxy-, 2-methyl-3-methoxy-, 2-Methyl-5-methoxy-, 2-Methyl-3',5-dimethoxy-, 3-Ethoxycarbonyl-3'-methoxy-, 3-Methyl-3'-butoxycarbonyl-, 3-Aceto-4,4'-diaminoazobenzol, 4-Amino-naphthalin-1-azo-4'-amino-benzol, 4-Amino-naphthalin-1-azo-3'-methyl-4'-aminobenzol und 4,4'-Diaminoazo-naphthalin.

Vorzugsweise verwendet werden 4,4'-Diaminoazobenzole, die mit Alkyl- und/oder Alkoxygruppen mit 1 bis 2 Kohlenstoffatomen substituiert sind und insbesondere 3-Methyl-, 3-Methoxy- und/oder 3-Ethoxy-4,4'-diaminoazobenzol.

Die erfindungsgemäß verwendeten 2,4-Diaminoazobenzole der Formel (II) oder 2,4-Diaminopyridine oder -oxide nach Formel (III), in den en D ein Rest der Benzolreihe oder ein schwefel- und/oder stickstoffhaltiger heterocyclischer Rest ist, sind ebenfalls bekannt oder können nach bekannten Verfahren durch Diazotieren der Aufbaukomponente D — im folgenden auch Diazokomponente genannt — und Kuppeln auf gegebenenfalls substituierte 2,6-Diamino-pyridine, -pyridinoxide oder vorzugsweise 1,3-Diaminobenzole — im folgenden auch Kupplungskomponente genannt — hergestellt werden. Hierbei können anstelle einer einheitlichen Diazokomponente und Kupplungskomponente auch Gemische aus zwei oder mehreren Diazokomponenten mit einer oder Gemischen aus zwei oder mehreren Kupplungskomponenten kombiniert werden.

Vorzugsweise stellt D einen gegebenenfalls durch Halogenatome, Hydroxy-, Cyan-, Rhodan-, Nitro-, Alkyl-, Trifluormethyl-, Alkoxy-, Formyl-, Alkylcarbonyl-, Benzoyl-, Methylbenzoyl-, Alkoxycarbonyl-, Benzyloxycarbonyl-, Cyclohexyloxycarbonyl-, Phenoxycarbonyl-, Alkoxycarbonyloxy-, Benzyloxycarbonyloxy-, Alkylcarbonyloxy-, Benzoyloxy-, Alkylcarbonylamino-, Benzoylamino-, Alkylsulfonyl-, Chloroethylsulfonyl-, Hydroxyethylsulfonyl-, unsubstituierte oder durch Alkylgruppen mono- oder disubstituierte Aminosulfonyl-, Di(hydroxyethyl)aminosulfonyl-, Phenylaminosulfonyl-, (Chlor- oder Methoxy)phenylaminosulfonyl-, Benzylaminosulfonyl-, N-Piperidylsulfonyl-, N-Morpholinosulfonyl-, niedere Alkylsulfonyloxy-, Cyclohexylsulfonyloxy-, Chlormethylsulfonyloxy-, Cyanethylsulfonyloxy-, Phenylsulfonyloxy-, Aminosulfonyloxy-, (Chlor- oder Methoxy)phenylsulfonyloxy-, N-Morpholinosulfonyloxy-, Ethylenaminosulfonyloxy-, Monoalkyl- oder Dialkylaminosulfonyloxy-, Phenylaminosulfonyloxy-, N-Phenyl-N(niederalkyl)aminosulfonyloxy-, N-(Methoxy- oder Chlor)phenylaminosulfonyloxy-, Phenylamino-, Nitrophenylamino-, Dinitrophenylamino-, Phenyl-, Phenoxy- und/oder Acetylaminophenylgruppen substituierten Phenylrest, einen gegebenenfalls durch Chlor- oder Bromatome, Hydroxyl-, Cyan-, Nitro-, Alkyl-, Trifluormethyl-, Alkoxy- oder Phenoxygruppen substituierten Phenylazophenylrest, einen gegebenenfalls durch Methyl-, Methoxy-, Ethoxy-, Phenylazo- oder Dimethylaminosulfonylgruppen substituierten Naphthylrest, einen gegebenenfalls durch Chlor- oder Bromatome, Nitro-, Cyan-, Rhodan-, Alkyl-, Alkoxy-, Alkylmercapto-, Phenyl-, Benzyl-, Phenethyl-, Alkoxycarbonyl-, Trifluormethyl-, Alkylcarbonyl- und Alkylsulfonylgruppen substituierten Thiazolylrest,

einen gegebenenfalls durch Chlor oder Bromatome, Cyan-, Rhodan-, Nitro-, Alkyl-, Alkoxy-, Benzyl-, Phenethyl-, Alkylsulfonyl-, Phenyl-, Alkylmercapto-, Alkoxycarbonyl-, Alkylcarbonyl, Trifluormethyl-, Cyanethylsulfonyl-, Aminosulfonyl- oder einen gegebenenfalls durch Mono- oder Dialkylaminosulfonylgruppen substituierten Benzthiazolylrest, einen gegebenenfalls durch Cyan-, Alkyl-, Alkoxy- niedere Alkoxycarbonyl- oder Phenylgruppen substituierten Pyrazolylrest, einen gegebenenfalls durch Alkoxy-, Alkyl-, Phenyl-, Alkylsulfonyl- oder Alkylmercaptogruppen substituierten Thiadiazolylrest, einen gegebenenfalls durch Nitro- oder Alkylgruppen substituierten Imidazolylrest, einen gegebenenfalls durch Nitro-, Alkyl-, Alkylsulfonyl-, Alkoxycarbonyl- oder Acetylgruppe substituierten Thienylrest, einen gegebenenfalls durch Alkyl-, Nitro-, Alkylsulfonyl-, Alkoxycarbonyl-, Cyan- oder Phenylgruppen substituierten Isothiazolylrest, einen gegebenenfalls durch Alkylgruppen, Nitrogruppen oder Halogenatome substituierten Benzisothiazolylrest, einen gegebenenfalls durch Alkyl-, Cycloalkyl-, Phenyl- oder Thienylgruppen substituierten Triazolylrest, einen gegebenenfalls durch Alkyl-, Alkoxy-, Nitrogruppen oder Halogenatome substituierten Indazolylrest, einen gegebenenfalls durch Alkyl-, Alkoxy-, Nitrogruppen oder Halogenatome substituierten Pyridyl- oder Pyridyl-N-oxidrest. Die genannten Alkyl- und Alkoxygruppen können linear oder verzweigt sein und besitzen 1 bis 12, vorzugsweise 1 bis 4 Kohlenstoffatome. Als Halogenatome seien vorzugsweise Chlor- und Bromatome genannt.

Als Rest D findet vorzugsweise ein gegebenenfalls durch Halogenatome, Alkyl-, Alkoxy- oder Alkoxycarbonylgruppen mit 1 bis 4 Kohlenstoffatomen im Alkylrest, substituierter Phenylrest Anwendung.

Als Diazokomponente D der Benzolreihe seien beispielshaft genannt:

Anilin,
2-, 3- oder 4-Chloranilin,
2,4- oder 2,5-Dichloranilin,
2-, 3- oder 4-Methylanilin,
2-, 3- oder 4-Ethylanilin,
4-Isopropylanilin,
2,4-Di-n-butylanilin,
2,4-Di-sek.-butylanilin,
4-tert.-Butylanilin,
4-n-Hexylanilin,
2-Methyl-3-, -4-, -5- oder -6-chloranilin,
2-, 3- oder 4-Methoxyanilin,
2-, 3- oder 4-Ethoxyanilin,
2-, 3- oder 4-Butoxyanilin,
2- oder 4-Phenoxyanilin,
2,4-Dimethylanilin,
2,4-Dimethoxyanilin,
2,4-Diethoxyanilin,
2,5-Dimethoxyanilin,
2,5-Diethoxyanilin,
2,5-Dimethoxy-4-chloranilin,
2-Methoxy-5-chloranilin,
2-Ethoxy-5-chloranilin,
2-Phenoxy-5-chloranilin,
2-, 3- oder 4-Nitroanilin,
2-Methyl-5-nitroanilin,
2-Nitro-4-methylanilin,
2-Chlor-, bzw. 2-Brom-4-nitroanilin,
2-Methoxy-4-nitroanilin,
4-Methoxy-2-nitroanilin,
2-Ethoxy-4-nitroanilin,
4-Ethoxy-2-nitroanilin,
2-, 3- oder 4-Cyananilin,
2-Methyl-4-cyananilin,
2-Cyan-4-nitroanilin,
3-Trifluormethylanilin,
2-Trifluormethyl-4-chlor-anilin,
2-Trifluormethyl-5-chlor-anilin,
3,4-Dimethoxyanilin,
4- oder 5-Aminoindan,
5- oder 6-Aminotetralin,
2-, 3- oder 4-Aminobenzoesäurethylester,
2-, 3- oder 4-Aminobenzoesäure-n-butylester,
2-, 3- oder 4-Aminobenzoesäure-(2′-ethyl)-n-hexylester,
2-Amino-3- oder -4-chlor-benzoesäuremethylester,
2-Amino-3,5-dichlor-benzoesäuremethylester,

4-Amino-3-brom-benzoesäuremethylester,
3-Amino-4-chlor-benzoesäuremethylester,
2-, 3- oder 4-Amino-benzoesäureamid
2-, 3- oder 4-Amino-benzoesäure-monomethylamid,
2-, 3- oder 4-Amino-benzoesäure-dimethylamid,
2-, 3- oder 4-Amino-benzoesäure-isopropylamid,
2-, 3- oder 4-Amino-benzoesäure-diethylamid,
2-, 3- oder 4-Amino-benzoesäure-di-n-butylamid,
2-, 3- oder 4-Amino-benzoesäure-(2′-ethyl)-n-hexylamid,
2-, 3- oder 4-Amino-benzolsulfonsäureamid,
2-, 3- oder 4-Amino-benzolsulfonsäure-monomethylamid,
2-, 3- oder 4-Amino-benzolsulfonsäure-dimethylamid,
2-, 3- oder 4-Amino-benzolsulfonsäure-diethylamid,
2-, 3- oder 4-Amino-benzolsulfonsäure-di-n-butylamid,
2-, 3- oder 4-Amino-benzolsulfonsäure-(2′-ethyl)-n-hexylamid,
1-Methyl-2-amino-benzol-4-sulfonsäureamid,
1-Methyl-2-amino-benzol-4-sulfonsäure-n-hexylamid,
1-Methoxy-2-amino-benzol-4-sulfonsäureamid,
1-Methoxy-2-amino-benzol-4-sulfonsäure-dimethylamid,
1-Methoxy-2-amino-benzol-4-sulfonsäure-di-n-butylamid,
1-Chlor-2-amino-benzol-4-sulfonsäure-dimethylamid,
1-Chlor-3-amino-benzol-4-sulfonsäureamid,
1-Chlor-4-amino-benzol-4-sulfonsäure-dimethylamid
1-Nitro-4-amino-benzol-3-sulfonsäure-di-n-butylamid,
2-, 3- oder 4-Aminoacetophenon,
2-, 3- oder 4-Aminobenzophenon,
4-Amino-4′-chlorbenzophenon,
2-Amino-2′,4′-dimethylbenzophenon,
4-Amino-2′-methylbenzophenon,
4-Amino-4′-ethylbenzophenon,
2-Amino-4′-methoxybenzophenon,
3-Amino-3′,4′-dimethoxybenzophenon,
4-Amino-4′-methoxybenzophenon,
3-Amino-4′-methoxybenzophenon,
4-Amino-4′-n-butylbenzophenon,
4-Amino-4′-isopropoxybenzophenon,
4-Amino-2-methylbenzophenon,
2-Amino-5-methylbenzophenon,
2-Amino-4,5-dimethylbenzophenon,
3-Amino-2,4-dimethylbenzophenon,
2-Amino-4,5-dimethoxybenzophenon,
2-Amino-4-methoxybenzophenon,
2-Methylsulfonyl-anilin,
3-Methylsulfonyl-anilin,
4-Methylsulfonyl-anilin,
4-Chlor-2-methylsulfonyl-anilin,
2-Chlor-4-methylsulfinyl-anilin,
2-Phenylsulfonyl-anilin,
3-Phenylsulfonyl-anilin,
4-Phenylsulfonyl-anilin,
2-Chlor-4-Phenylsulfonyl-anilin,
4-Chlor-2-(1′-chlorphenylsulfonyl-anilin,
3-Chlor-4-(phenylsulfonyl-anilin,
4-(4′-Methylsulfonyl)-anilin,
4-(4′-Isopropylphenylsulfonyl)-anilin,
4-(2′,4′-Dimethoxyphenylsulfonyl)-anilin,
4-(3′,5′-Dimethoxyphenylsulfonyl)-anilin,
4-(4′-Methoxyphenylsulfonyl)-anilin,
4-(4′-Ethoxyphenylsulfonyl)-anilin,
2-(4′-Methoxyphenylsulfonyl)-anilin,
4-(4′-n-Butylphenylsulfonyl)-anilin,
4-(4′-n-Butoxyphenylsulfonyl)-anilin,
4-(2′,4′-Dimethylsulfonyl)-anilin,
4-Aminodiphenylether,
4-Amino-diphenyl-methan,

4-Amino-azo-benzol,
4-Amino-3,2'-dimethyl-azo-benzol,
4-Amino-3,3'-dimethyl-azo-benzol,
4-Amino-2,2'-dimethyl-azo-benzol,
4-Amino-4'-isobutyl-azo-benzol,
4-Amino-4'-n-butoxy-azo-benzol,
4-Amino-3,6-dimethoxy-4'-nitro-azo-benzol,
4-Amino-3,6-dimethoxy-2'-chlor-4'-nitro-azo-benzol,
4-Amino-3-ethoxy-4'-nitro-azo-benzol,
4-Amino-4'-trifluormethyl-azo-benzol,
4-Amino-4'-ethoxycarbonyl-azo-benzol,
4-Amino-3,6-dimethoxy-4'-(2''-ethyl-n-hexoxycarbonyl)-azo-benzol,
4-Amino-3,6-dimethyl-4'-methylcarbonyl-azo-benzol,
4-Amino-3,6-dimethyl-4'-methylsulfonyl-azo-benzol,
4-Amino-3-methoxy-6-methyl-4'-(2''-ethyl-n.-hexylsulfonyl)-azo-benzol,
4-Amino-2-methyl-2'-chlor-4'-nitro-azo-benzol und
4-Amino-3-chlor-3'-nitro-azo-benzol.

Aus der Reihe der heterocyclische Diazokomponenten D seien beispielhaft genannt:
2-Aminothiazol,
2-Amino-5-nitrothiazol,
2-Amino-5-methylsulfonyl-thiazol,
2-Amino-5-cyanothiazol,
2-Amino-4-methyl-5-nitrothiazol,
2-Amino-4-methylthiazol,
2-Amino-4-phenylthiazol,
2-Amino-4-(4'-chlor)-phenylthiazol,
3-Aminopyridin,
2-Aminopyridin-N-oxid
3-Aminochinolin,
3-Aminopyrazol,
5-Amino-1-phenylpyrazol,
3-Aminoindazol,
3-Amino-1,2,4-triazol,
3-Amino-1-(4'-methoxyphenyl)-pyrazol,
5-(Methyl-, Ethyl-, Phenyl- oder Benzyl-)-1,2,4-triazol,
2-Aminobenzthiazol,
2-Amino-6-methylbenzthiazol,
2-Amino-6-methoxybenzthiazol,
2-Amino-6-chlorbenzthiazol,
2-Amino-6-chlorbenzthiazol,
2-Amino-6-cyanbenzthiazol,
2-Amino-6-nitrobenzthiazol,
2-Amino-6-carboethoxybenzthiazol,
2-Amino-6-methylsulfonylbenzthiazol,
2-Amino-1,3,4-thiadiazol,
2-Amino-1,3,5-thiadiazol,
2-Amino-4-phenyl- oder -4-methyl-1,3,5-thiadiazol,
2-Amino-4-methyl-1,3,5-thiadiazol,
2-Amino-5-phenyl-1,3,4-thiadiazol,
2-Amino-3-nitro-5-methylsulfonylthiophen,
2-Amino-3-nitro-5-acetylthiophen,
5-Amino-3-methyl-4-nitroisothiazol,
3-Amino-5-nitro-2,1-benzisothiazol,
5-Amino-4-nitro-1-methylimidazol,
4-Amino-7-nitrobenztriazol.

Als Kupplungskomponente seien beispielsweise die folgenden gegebenenfalls substituierten 1,3-Diaminobenzole und 2,6-Diaminopyridine oder -pyridinoxide genannt, wobei bevorzugt solche Derivate Anwendung finden, in denen $R^1$ bis $R^3$ Wasserstoffatome, Alkylgruppen mit 1 bis 4 Kohlenstoffatomen oder/und Alkoxygruppen mit 1 bis 4 Kohlenstoffatomen sind:
1,3-Diaminobenzol,
2-Methyl-1,3-diaminobenzol,
4-Methyl-1,3-diaminobenzol,
2-Ethyl-1,3-diaminobenzol,
4-Ethyl-1,3-diaminobenzol,
2-Isopropyl-1,3-diaminobenzol,

4-Isopropyl-1,3-diaminobenzol,
2,4-Dimethyl-1,3-diaminobenzol,
4,6-Dimethyl-1,3-diaminobenzol,
2,4-Diethyl-1,3-diaminobenzol,
4-n-Butyl-1,3-diaminobenzol,
2,4,5-Trimethyl-1,3-diaminobenzol,
4-Methoxy-1,3-diaminobenzol,
4-Ethoxy-1,3-diaminobenzol,
4-Butoxy-1,3-diaminobenzol,
4-Hexoxy-1,3-diaminobenzol,
4-Octoxy-1,3-diaminobenzol,
5-Methoxy-1,3-diaminobenzol,
4-Chlor-1,3-diaminobenzol,
4-Cyano-1,3-diaminobenzol,
4-Phenyl-1,3-diaminobenzol,
4-Cyclohexyl-1,3-diaminobenzol,
4-Carboxymethoxy-1,3-diaminobenzol,
4-Carboethoxy-1,3-diaminobenzol,
4-Carbobutoxy-1,3-diaminobenzol,
4-(n-Ethylcarbamoyl)-1,3-diaminobenzol,
4-(N,N-Diethylcarbamoyl-1,3-diaminobenzol,
2,6-Diaminopyridin,
4-Methyl-2,6-diaminopyridin,
3-Cyano-2,6-diaminopyridin,
3-Cyano-4-methyl-2,6-diaminopyridin und
3-Carbamoyl-4-methyl-2,6-diaminopyridin.

Die erfindungsgemäß verwendbaren gegebenenfalls substituierten 4,4'- bzw. 2,4-Diaminoazobenzole und 2,6-Diaminoazopyridine oder deren N-oxide sind bei Raumtemperatur in den Polyolen, insbesondere Polyetherolen und Polyesterolen, ausreichend gut löslich. Die Mischungen besitzen auch bei hohen Gehalten an den erfindungsgemäßen Verbindungen eine beachtliche Fließfähigkeit, so daß Schußzeiten bis zu 15 Sekunden auf Hochdruck-Maschinen möglich sind.

Für eine Reihe ausgewählter 4,4'- bzw. 2,4-Diaminobenzole werden für die Umsetzung mit 4,4'-Diphenylmethan-diisocyant die relativen Reaktionsgeschwindigkeiten bestimmt, die in der folgenden Tabelle zusammengefaßt sind. Die Ergebnisse zeigen, daß die Reaktivitäten in idealer Weise zwischen denen für 3,3'-Dichlor-4,4'-diaminodiphenylmethan und 1-Methyl-3,5-diethyl-2,4-bzw. -2,6-diaminobenzol liegen.

TABELLE

Exothermtest von primären aromatischen Diaminen

| primäres aromatisches Diamin | relative Reaktionsgewindigkeit für t → o |
|---|---|
| 3,3'-Dichlor-4,4'-diaminodiphenylmethan | 1 |
| 1-Methyl-3,5-diethyl-2,4(2,6)-diaminobenzol | 31 |
| 4,4'-Diaminoazobenzol | 8 |
| 3-Methoxy-4,4'-diaminobenzol | 11 |
| 3-Methoxy-6-methyl-4,4'-diaminoazobenzol | 5 |
| 3,5-Dimethyl-4,4'-diaminoazobenzol | 3 |
| 3,5-Diisopropyl-4,4'-diaminobenzol | 3 |
| 3-Ethoxy-4,4'-diaminobenzol | 6 |
| 2,4-Diaminoazobenzol | 1,5 |
| 2,4-Diamino-4'-methyl-azobenzol | 2 |

Der für die Messung angewandte Exothermtest wurde auf folgende Weise durchgeführt:

50 ml einer 0,9 molaren Lösung von 4,4'-Diphenylmethan-diisocyanat in wasserfreiem Dimethylsulfoxid wurden in einem isolierten Gefäß auf 23°C erwärmt. Unter Rühren 50 ml einer 0,6 molaren, ebenfalls auf 23°C temperierten Lösung von Diaminoazobenzol in Dimethylsulfoxid hinzugefügt und die auftretende Wärmetönung graphisch aufgezeichnet.

Aus der Anfangssteigung der Exothermkurve wird nach der Formel

$$\left(\frac{d\ T}{dt}\right)_{t \to o} = k_1 \cdot \Delta T_{ad}$$

in der beuten:

t: Zeit (sec)

$\Delta T_{ad}$: unter adiabatischen Bedingungen gemessene Temperaturdifferenz zwischen $T_o$ und $T_{max}$,

$k_1$: die Anfangsreaktionsgeschwindigkeit,

die Anfangsreaktionsgeschwindigkeit berechnet und diese für 3,3'-Dichlor-4,4'-diamino-diphenylmethan willkürlich gleich 1 gesetzt. Alle anderen Meßwerte werden dann auf diesen Vergleichsstandard bezogen berechnet.

Erfindungsgemäß verwendbar sind sowohl Einzelverbindungen, die den Formeln (I), (II) oder (III) entsprechen, als auch Mischungen aus Verbindungen der Formeln (I), (II) und/oder (III).

Gegebenenfalls kann es auch zweckmäßig sein, die oben genannten Diaminoazobenzole bzw. Diaminoazopyridine der Formeln (I), (II) and/oder (III) teilweise durch Kettenverlängerungsmittel ($D^1$), sek. aromatische Diamine, alkylsubstituierte Phenylendiamine und/oder alkylsubstituierte 4,4'-Diamino-diphenylmethane ($D_2$) zu ersetzten. Geeignet sind beispielsweise Mischungen aus den genannten Aufbaukomponenten, die mehr als 60 Gew.%, vorzugsweise mehr als 85 Gew.%, bezogen auf das Gesamtgewicht, gegebenenfalls substituierte Diaminopyridine oder vorzugsweise gegebenenfalls substituierte Diaminoazobenzole enthalten.

Als Kettenverlängerungsmittel ($D_1$) können beim erfindungsgemäßen Verfahren di- bis tetrafunktionelle, vorzugsweise di- und/oder trifunktionelle araliphatische und/oder vorzugsweise aliphatische Polyole mit Molekulargewichten von 48 bis 400, vorzugsweise 60 bis 300, verwendet werden. In Betracht kommen beispielsweise aliphatische und/oder araliphatische Diole mit 2 bis 14, vorzugsweise 2 bis 6 Kohlenstoffatomen, wie Ethylenglykol, Propandiol-1,3, Butandiol-1,4, Pentandiol-1,5, Hexandiol-1,6, Octandiol-1,8, Decandiol-1,10, Diethylenglykol, Dipropylenglykol und Bis-(2-hydroxyethyl)-hydrochinon, Triole, wie Glycerin und Trimethylolpropan, Tetrole, wie Pentaerythrit und niedermolekulare hydroxylgruppenhaltige Polyoxyalkylenpolyether aus Basis Ethylenoxid und/oder Propylenoxid und den vorgenannten Polyolen oder aliphatischen Diaminen mit Molekulargewichten von 60 bis 116 als Startermoleküle.

Als sek. aromatische Diamine ($D_2$) seien beispielhaft genannt: N,N'-dialkylsubstituierte aromatische Diamine, die gegebenenfalls am aromatischen Kern durch Alkylreste substituiert sein Können, mit 1 bis 20, vorzugsweise 1 bis 20, vorzugsweise 1 bis 4 Kohlenstoffatomen im N-Alkylrest, wie N,N'-Diethyl-, N,N'-Di-sek-pentyl-, N,N'-Di-sek-hexyl, N,N'-Di-sek-decyl-, N,N'-Dicyclohexyl-p-bzw. M-phenylendiamin, N,N'-Dimethyl, N,N'-Diethyl, N,N'-Diisopropyl-, N,N'-Di-sek-butyl-, N,N'-Dicyclohexyl-4,4'-diamino-diphenylmethan und N,N'-Di-sek-butyl-benzidin.

Als alkylsubstituierte m-Phenylendiamine ($D_2$) kommen beispielsweise in Betracht: 2,4-Dimethyl-, 2,4-Diethyl-, 2,4-Diisopropyl-, 2,4-Diethyl-6-methyl-, 2-Methyl-4,6-diethyl-, 2,4,6-Triethyl-, 2,4-Dimethyl-6-cyclohexyl-, 2-Cyclohexyl-4,6-diethyl-, 2-Cyclohexyl-2,6-diisopropyl-, 2,4-Dimethyl-6-(1-ethyl-n-propyl)-, 2,4-Dimethyl-6-(1,1-dimethyl-n-propyl)- und 2-(1-Methyl-n-butyl)-4,6-dimethyl-phenylendiamin-1,3.

Bewährt haben sich ferner Diamino-diphenylmethane, ($D_2$) wie z.B. 4,4'- und/oder 2,4-Diaminodiphenylmethan, 3,3'-di- und 3,3',5,5'-tetra-n-alkylsubstituierte 4,4'Diamino-diphenylmethane.

Beispielhaft genannt seien: 3,3'-Dimethyl-, 3,3'-Diethyl-, 3,3',5-Trimethyl-5'-isopropyl-, 3,3',5-Triethyl-5'-isopropyl-, 3,3',5-Trimethyl-5'-sek-butyl-, 3,3',5-Trimethyl-5'-sek-butyl-4,4'-diamino-diphenylmethan, 3,3'-Dimethyl-5,5'-diisopropyl-, 3,3'-Diethyl-5,5'-diisopropyl-, 3,3'-Dimethyl-5,5'di-sek-butyl-, 3,3'-Diethyl-5,5'-di-sek-butyl-, 3,5-Dimethyl-3',5'-diisopropyl-, 3,5-Diethyl-3',5'-diisopropyl-, 3,5'-Dimethyl-3',5-di-sek-butyl-, 3,5-Diethyl-3',5'-di-sek-butyl-4,4'-diamino-diphenyl-methan, 3-Methyl-3',5,5'-triisopropyl-, 3-Ethyl-3',5,5'-triisopropyl-, 3-Methyl-3',5,5'-tri-sek-butyl-, 3-Ethyl-3',5,5'-tri-sek-butyl-4,4'-diamino-diphenyl-methan, 3,3'-Diisopropyl-5,5'-di-sek-butyl-, 3,5-Diisopropyl-3',5'-di-sek-butyl-, 3-Ethyl-5-sek-butyl-3',5'-diisopropyl-, 3-Methyl-5-tert.-butyl-3',5'-diisopropyl-, 3-Ethyl-5-sek.-butyl-3'-methyl-5'-tert.-butyl-, 3,3',5,5'-Tetramethyl-, 3,3',5,5'-Tetraethyl- und 3,3',5,5'-Tetra-n-propyl-, 3,3',5,5'-Tetraisopropyl und 3,3',5,5'-Tetra-sek-butyl-4,4'-diaminodiphenylmethan.

Vorzugsweise verwendet werden die folgenden alkylsubstituierten 1,3-Phenylendiamine oder alkylsubstituierten 4,4'-Diamino-diphenylmethane, 2,4-Diethyl-, 2,4-Dimethyl-phenylen-diamin-1,3, 2,4-Diethyl-6-methyl-, 2-Methyl-4,6-diethyl-phenylendiamin-1,3, 2,4,6-Triethyl-phenylendiamin-1,3, 2,4-Dimethyl-6-tert.-butyl-, 2,4-Dimethyl-6-isooctyl- und 2,4-Dimethyl-6-cyclohexyl-phenylendiamin-1,3 sowie 3,5-Dimethyl-3',5'-diisopropyl- und 3,3',5,5'-Tetraisopropyl-4,4'-diamino-diphenylmethan.

Als Katalysatoren (E) werden insbesondere Verbindungen verwendet, die die Reaktion der Polyole und gegebenenfalls hydroxylgruppenhaltigen Kettenverlängerungsmittel mit den Polyisocyanaten stark

beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinn-dilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin, Pentamethyldiethylentriamin, Tetramethyl-diaminoethylether, Bis-(dimethylaminopropyl)-harnstoff, Dimethylpiperazin, 1,2-Dimethylimidazol, 1-Azo-bicyclo-(3,3,0)-octan und vorzugsweise Triethylendiamin, 1,4-Diaza-bicyclo-(2,2,2)-octan und Alkanolaminverbindungen, wie Triethanolamin, Triisopropanolamin, N-Methyl- und N-Ethyl-diethanolamine und Dimethylethanolamin.

Als Katalysatoren kommen ferner in Betracht: Tris-(dialkylaminoalkyl)-s-hexahydrotriazine, insbesondere Tris-N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.%, insbesondere 0,05 bis 2 Gew.% Polyurethan-Katalysator bzw. Polyurethan-Katalysatorkombination bezogen auf das Polyolgewicht.

Zur Beschleunigung der Polyharnstoffbildung aus den Diaminoazobenzolen und/oder Diaminoazopyridin oder deren Oxiden und organischen Polyisocyanaten werden organische Carbonsäuren, wie z.B. Adipinsäure, Azelainsäure, 2-Methylbenzoesäure verwendet, die in Mengen von 0,1 bis 10 Gew.%, vorzugsweise 1 bis 5 Gew.%, bezogen auf das Gewicht der Diamine eingesetzt werden. Vorzugsweise verwendet wird die 4-Methoxybenzoesäure.

Treibmittel, Hilfs- ind Zusatzstoffe (F):

Zu Treibmitteln, welche im erfindungsgemäßen Verfahren gegebenenfalls eingesetzt werden können, gehört Wasser, das mit Isocyanatgruppen unter Bildung von Kohlendioxid reagiert. Die Wassermenge, die zweckmäßigerweise verwendet wird, beträgt 0,1 bis 2 Gew.%, bezogen auf das Polyolgewicht.

Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendet Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan. Auch Gemische dieser niedrigsiedenden, inerten Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zelligen Polyurethan-Polyharnstoff-Formkörper hängt ab von der Dichte, die man erreichen will sowie gegebenenfalls von der Mitverwendung von Wasser. Im allgemeinen liefern Mengen von 1 bis 15 Gew.-Teilen, bezogen auf 100 Gew.-Teile Polyol, zufriedenstellende Ergebnisse.

Der Reaktionsmischung können gegebenenfalls auch noch Hilfs- und Zusatzstoffe einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatische wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsäures Diethylamin oder stearinsaures Diethanolamin, Salze von Sulfonsäuren, z.B. Alkali- oder Ammoniumsalze von Dodecylbenzol- oder Dinaphthylmethan-disulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteile Polyol, angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen.

In einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht: Kohle, Melamin, Kollophonium,

Cyclopentadienylharze und vorzugsweise Pfropfpolymerisate auf Styrol-Acrylnitrilbasis, die durch in situ Polymerisation von Acrylnitril-Styrol-Mischungen in Polyetherolen analog den Angaben der deutschen Patentschriften 11 11 394, 12 22 669, (US 3 304 273, 3 383 351, 3 523 093) 11 52 536 (GB 1 040 452) und 11 52 537 (GB 987 618) hergestellt werden sowie Fillerpolyole, bei denen wäßrige Polymerdispersionen in Polyoldispersionen übergeführt werden.

Die anorganischen und organischen Füllstoffe können einzeln oder als Gemische verwendet werden. Vorzugsweise Anwendung finden stabile Füllstoff-Polyol-Dispersionen, bei denen die Füllstoffe in Gegenwart von Polyolen in situ mit hohen örtlichen Energiedichten auf eine Teilchengröße kleiner als 7 µm zerkleinert und hierbei gleichzeitig dispergiert werden. Füllstoff-Polyol-Dispersionen dieser Art werden beispielsweise in den DE—OS 28 50 609, 28 50 610 und 29 32 304 beschrieben.

Die anorganischen und organischen Füllstoffe werden der Reaktionsmischung vorteilhafterweise in Mengen von 0,5 bis 50 Gew.%, vorzugsweise 1 bis 40 Gew.%, bezogen auf das Gewicht der Polyisocyanat-Polyol-Mischung einverleibt.

Geeignete Flammschutzmittel sind beispielsweise Trikresylphosphat, Tris-2-chlorethylphosphat, Trischlorpropylphosphat und Tris-2,3-dibrompropylphosphat.

Außer den bereite genannten halogensubstituierten Phosphaten können auch anorganische Flammschutzmittel, wie Aluminiumoxidhydrat, Antimontrioxid, Arsenoxid, Ammoniumpolyphosphat und Calciumsulfat sowie Veresterungsprodukte niedermolekularer Polyole und halogenierter Phthalsäurederivaten zum Flammfestmachen der kompakten oder zelligen Polyurethane verwendet werden. Im allgemeinen hat es sich als zweckmäßig erwiesen, 5 bis 50 Gewichtsteile, vorzugsweise 5 bis 25 Gewichtsteile der genannten Flammschutzmittel für jeweils 100 Gewichtsteile an Polyol zu verwenden.

Nähere Angaben über die obengennanten anderen üblichen Hilfs- und Zusatzstoffe sind der Fachliteratur, beispielsweise der Monographie von J. H. Saunders und K. C. Frisch "High Polymers" Band XVI, Polyurethanes, Teil 1 und 2, Verlag Interscience Publishers 1962 bzw. 1964, zu entnehmen.

Zur Herstellung der gegebenenfalls zelligen Polyurethan-Polyharnstoff-Formkörper werden die organischen Polyisocyanate, Polyole, Diaminoazobenzole, Diaminoazopyridine und/oder deren Oxide und gegebenenfalls Kettenverlängerungsmittel, sek. aromatische Diamine, alkylsubstituierte Phenylendiamine und/oder alkylsubstituierte 4,4'-Diaminodiphenylmethane in solchen Mengen zur Umsetzung gebracht, daß das Verhältnis von NCO-Gruppen zu Zerewitinoff aktiven Wasserstoffatomen, gebunden an OH—, —$NH_2$ und —NHR—Gruppen 1:0,90 bis 1,25 vorzugsweise 1:0,95 bis 1,15 beträgt.

Die Herstellung der zelligen und vorzugsweise kompakten Polyurethan-Polyharnstoff-Formkörper erfolgt vorzugsweise im one shot-Verfahren nach der bekannten Reaktionsspritz-guß-Technik. Diese Verfahrensweise wird beispielsweise beschrieben von Piechota und Röhr in "Integralschaumstoff", Carl-Hanser-Verlag, München, Wien 1975; D. J. Prepelka und J. L. Wharton in Journal of Cellular Plastics, März/April 1975, Seiten 87 bis 98 und U. Knipp in Journal of Cellular Plastics, März/April 1973, Seiten 76 bis 84. Die Formulierungen lassen sich jedoch auch zu Gießelastomeren und Integralschaumsoffen auf konventionelle Art verarbeiten.

Die erfindungsgemäß verwendbaren Diaminoazobenzole, -pyridine und/oder -pyridinoxide werden in den Polyolen unter Rühren, gegebenenfalls bei erhöhten Temperaturen, beispielsweise zwischen 30 und 120°C, gelöst. Nach einer vorteilhaften Ausführungsform werden die aufgeschmolzenen Diaminoazobenzole, -pyridine und/oder -pyridinoxide den erwärmten Polyolen unter Rühren einverleibt.

Bei Verwendung einer Mischkammer mit mehreren Zulaufdüsen können die flüssigen Ausgangskomponenten oder Lösungen von festen in flüssigen Ausgangskomponenten einzeln zugeführt und in der Mischkammer intensiv vermischt werden. Als besonders vorteilhaft hat es sich erwiesen, nach dem Zweikomponenten-Verfahren zu arbeiten und die Lösung aus Diaminoazobenzolen und/oder -pyridinen bzw. -oxiden und Polyolen mit den Katalysatoren und gegebenenfalls Kettenverlängerungsmitteln, sek. aromatischens Diaminen, alkylsubstituierten Phenylendiaminen, alkylsubstituierten Diamino-diphenylmethanen, Treibmitteln, Hilfsmitteln und Zusatzstoffen in der A-Komponente zu vereinigen und als B-Komponente die organische Polyisocyanate zu verwenden.

Die Menge des in die Form eingebrachten Reaktionsgemisches wird so bemessen, daß die erhaltenen kompakten Formkörper eine Dichte von 0,8 bis 1,4 $g/cm^3$, vorzugsweise von 0,9 bis 1,35 $g/cm^3$ und die zelligen Formkörper eine Dichte von 0,1 bis 0,8 $g/cm^3$, vorzugsweise von 0,15 bis 0,6 $g/cm^3$ aufweisen. Die Ausgangskomponenten werden mit einer Temperatur von 15 bis 140°C, vorzugsweise von 20 bis 110°C in die Form eingebracht. Die Formtemperatur beträgt zweckmäßigerweise 20 bis 120°C, vorzugsweise 40 bis 110°C, gegebenenfalls kann es vorteilhaft sein übliche Formtrennmittel, beispielsweise auf Wachs- oder Silikonbasis, zur Verbesserung der Entformung, einzusetzen. Die Verdichtungsgrade liegen üblicherweise zwischen 1 und 8, vorzugsweise zwischen 1 und 6.

Die nach dem erfindungsgemäßen Verfahren erhältlichen kompakten Polyurethan-Polyharnstoff-Formkörper eignen sich insbesondere zur Verwendung in der Automobilindustrie, beispielsweise als Stoßstangenabdeckungen und Karosserieteile wie Kotflügel, Spoiler und Radkästenverbreiterungen sowie technische Gehäuseteile, Schuhsohlen und Laufrollen, die zelligen Schaumstoffe finden beispielsweise als Armlehnen, Kopfstützen, Sicherheitsabdeckungen im Automobilinnenraum sowie als Motorrad- und Fahrradsättel, Sitzkissen und Deckschichten in Verbundschaumstoffen Anwendung.

Die in den Beispiel genannten Teile beziehen sich auf das Gewicht.

Beispiel 1

In 72,4 Teilen eines Blockcopolyetherols auf Basis Glycerin-Propylenoxid-Ethylenoxid (OH—Zahl 25) wurden 25 Teile 3-Methoxy-4,4'-diaminoazobenzol in der Wärme (70°C) gelöst und danach
1,0 Teile einer 35 %igen Lösung von Triethylendiamin in Dipropylenglykol,
0,1 Teile eines Amidin-Zinnkomplexkatalysators und
1,4 Teile 4-Methoxybenzoesäure hinzugegeben und die Mischung homogenisiert.

100 Teile dieser Mischung wurden mit 46,5 Teilen eines Umsetzungsproduktes aus 4,4'-Diphenylmethandiisocyanat und Dipropylenglykol (NCO—Gehalt 23%) in einer Hochdruckdosieranlage vom Typ (R)Puromat (Elastogran Maschinenbau) vermischt und zu einer Formplatte von den Abmessungen 400 × 200 × 4 mm verspritzt.

Dabei betrug die Temperatur der Reaktionskomponenten und der Form 50°C. Die Formplatte konnte nach 2 min entformt werden. Es wurden folgende Eigenschaftswerte ermittelt:

| | |
|---|---|
| Härte [Shore D] | 58—60 |
| Reißfestigkeit [N/mm²] | 24 |
| Reißdehnung [%] | 220 |
| Weiterreißfestigkeit [N/mm²] nach Graves | 96 |
| Biege-E-Modul, 23°C [N/mm²] | 560 |

Beispiel 2

In 72,4 Teilen eines Blockcopolyetherols nach Beispiel 1 wurden 25 Teile 3-Ethoxy-4,4'-diaminoazobenzol in der Wärme gelöst und danach
1,0 Teile einer 33 %igen Lösung von Triethylendiamin in Dipropylenglykol und
0,1 Teile eines Amidin-Zinnkomplexkatalysators hinzugegeben.

100 Teile dieser Mischung werden mit 43,7 Teilen Isocyanatopräpolymer, wie in Beispiel 1 beschrieben, verarbeitet. Die nach 3 min. entformte Prüfplatte ergab folgende Meßwerte:

| | |
|---|---|
| Härte [Shore D] | 60 |
| Reißfestigkeit [N/mm²] | 23 |
| Reißdehnung [%] | 200 |
| Weiterreißfestigkeit [N/mm²] nach Graves | 88 |
| Biege-E-Modul, 23°C [N/mm²] | 500 |

Beispiel 3

In 73,9 Teilen des Blockcopolyetherols nach Beispiel 1 wurden 25 Teile 2,4-Diaminoazobenzol gelöst und danach
1,0 Teile einer 33 %igen Lösung von Triethylendiamin in Dipropylenglykol und
0,1 Teile eines Amidin-Zinnkomplex-Katalysators hinzugefügt.

100 Teile dieser Mischung werden mit 54,5 Teilen Isocyanatopräpolymer, wie in Beispiel 1 beschrieben, zu Formplatten verarbeitet. Dabei betrug die Temperatur der Polyolkomponente 70°C und die der Isocyanatkomponente 60°C. Die Form war auf 50°C temperiert.

Die Platte konnte nach 3 min entformt werden und zeigte folgende Eigenschaften:

| | |
|---|---|
| Härte [Shore D] | 62—63 |
| Reißfestigkeit [N/mm²] | 27 |
| Reißdehnung [%] | 280 |
| Weiterreißfestigkeit [N/mm²] nach Graves | 102 |
| Biege-E-Modul, 23°C [N/mm²] | 650 |

**Patentansprüche**

1. Verfahren zur Herstellung von kompakten oder zelligen Polyurethan-Polyharnstoff-Formkörpern durch Umsetzung von

(A) organischen Polyisocyanaten,

(B) Polyolen und

(C) aromatischen Diaminen,

oder Mischungen aus

(C) aromatischen Diaminen und

($D_1$) Kettenverlängerungsmitteln, ($D_2$) sek. aromatischen Diaminen, alkylsubstituierten Phenylendiaminen und/oder alkylsubstituierten 4,4'-Diamino-diphenylmethanen in Gegenwart von (E) Katalysatoren sowie gegebenenfalls (F) Treibmitteln, Hilfs- und Zusatzstoffen, dadurch gekennzeichnet daß man als aromatische Diamine (C) verwendet:

Diaminoazobenzole oder Diaminoazopyridine der Formen

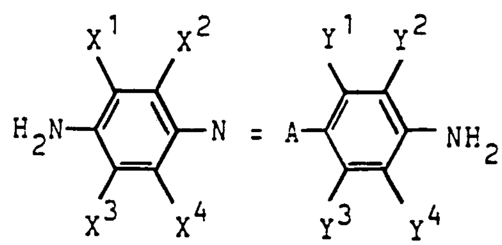

(I)

in der die Substituenten $X^1$ bis $X^4$ und $Y^1$ bis $Y^4$ gleich oder verschieden sind und bedeuten:

ein Wasserstoffatom,

einen linearen oder verzweigten Alkylrest mit 1 bis 6 Kohlenstoffatomen,

einen linearen oder verzweigten Alkoxyrest mit 1 bis 12 Kohlenstoffatomen,

einen linearen oder verzweigten Alkoxycarbonylrest mit 1 bis 12 Kohlenstoffatomen,

einen linearen oder verzweigten Alkylsulfonylrest mit 1 bis 12 Kohlenstoffatomen,

mit der Maßgabe, daß mit Ausnahme von Wasserstoff oder dem Methylrest nicht mehr als zwei gleichartige Reste in einem Phenylenrest gebunden sind oder

$X^1$ und $X^2$ sowie $Y^1$ und $Y^2$ zusammen einen ankondensierten Benzolkern bilden, wobei die übrigen Substituenten $X^3$, $X^4$, $Y^3$ und $Y^4$ die oben genannte Bedeutung haben, und

A ein Stickstoffatom oder eine N—O—Gruppe ist,

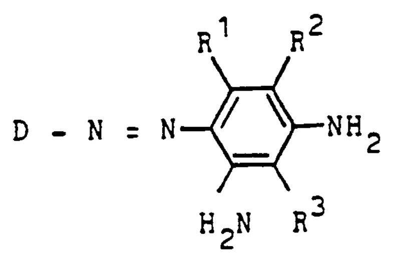

(II)

oder

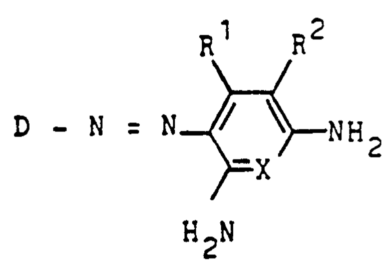

(III)

,

in denen die Substituenten $R^1$, $R^2$ und $R^3$ gleich oder verschieden sind und bedeuten:

ein Wasserstoffatom,

einen linearen oder verzweigten Alkylrest mit 1 bis 4 Kohlenstoffatomen,

einen linearen oder verzweigten Alkoxyrest mit 1 bis 8 Kohlenstoffatomen,

oder einer der Reste $R^1$ bis $R^3$

eine Phenylgruppe,

einen Cycloalkylrest mit 3 bis 7 Kohlenstoffatomen,

einen Alkoxycarbonylrest mit 1 bis 4 Kohlenstoffatomen,

einen Alkylcarbonylrest mit 1 bis 4 Kohlenstoffatomen,

einen Benzoyl-,

Carbamoyl-,

einen N-Akyl- oder N,N,-Dialkylcarbamoylrest mit 1 bis 4 Kohlenstoffatomen,

wobei die übrigen Reste $R^1$ bis $R^3$ eine Wasserstoffatom, ein Alkyl- oder Alkoxyrest mit der oben genannten Bedeutung sind,

D ein aromatischer Rest der Benzolreihe oder ein schwefel- und/oder stickstoffhaltiger heterocyclischer Rest und

X Stickstoff oder eine N—O—Gruppe sind,

und die vorgenannten Aufbaukomponenten bei einer Temperatur von 15 bis 140°C in solchen Mengen zur Umsetzung bringt, daß das Verhältnis von NCO-Gruppen zu Zerewitinoff aktiven Wasserstoffatomen, gebunden an OH—, $H_2N$— und RHN-Gruppen, 1:0,90 bis 1,25 beträgt.

2. Verfahren nach Anspruch 1, dadurch gekennzeichnet, daß man als Diaminoazobenzole (C) mit Alkylgruppen mit 1 bis 2 Kohlenstoffatomen und/oder Alkoxygruppen mit 1 bis 2 Kohlenstoffatomen substituierte 4,4'-Diaminoazobenzole der Formel I und/oder Diaminoazobenzole der Formel II verwendet.

3. Verfahren nach Anspruch 1 oder 2, dadurch gekennzeichnet, daß man als Diaminoazobenzole (C) 3-Methyl-, 3-Methoxy- und/oder 3-Ethoxy-4,4'-diaminoazobenzol verwendet.

4. Verfahren nach Anspruch 1 oder 2, dadurch gekennzeichnet, daß man als Diaminoazobenzole (C) 2-Methyl-5-methoxy-4,4'-diaminobenzol verwendet.

5. Verfahren nach Anspruch 1 oder 2, dadurch gekennzeichnet, daß man als Diaminoazobenzole (C) 2,4-Diaminoazobenzol und/oder 2,4-Diamino-4'-methylazobenzol verwendet.

6. Verfahren nach Anspruch 1 bis 5, dadurch gekennzeichnet, daß man als Katalysator (E) für die Polyharnstoffbildung aus den Diaminoazobenzolen und/oder -pyridinen und organischen Polyisocyanaten 4-Methoxybenzoesäure in einer Menge von 0,1 bis 10 Gew.%, bezogen auf das Gewicht der Diamine, verwendet.

7. Verfahren nach einem der Ansprüche 1 bis 6, dadurch gekennzeichnet, daß man die Aufbaukomponenten nach der Reaktionsspritzgußtechnik zu Formkörpern verarbeitet.

**Revendications**

1. Procédé de préparation de corps moulés compacts ou cellulaires en polyuréthanne-polyurée, par réaction

(A) de polyisocyanates organiques,

(B) de polyols et

(C) de diamines aromatiques, ou

de mélanges

(C) de diamines aromatiques et

($D_1$) d'agents d'allongement de chaîne, ($D_2$) de diamines aromatiques secondaires, de phénylènediamines alkylsubstituées et/ou de 4,4'-diamino-diphénylméthanes alkylsubstitués en présence (E) de catalyseurs ainsi qu'éventuellement (F) d'agents moussants, d'adjuvants et d'additifs, caractérisé en ce qu'on utilise, comme diamines aromatiques (C):

des diaminoazobenzènes ou des diaminoazopyridines répondant aux formules

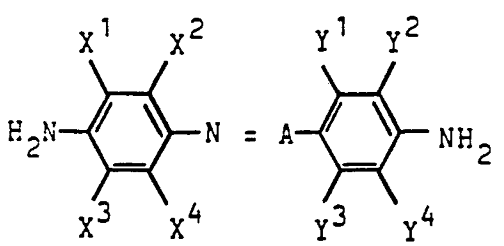

(I)

dans laquelle les substituants $X^1$ à $X^4$ et $Y^1$ à $Y^4$ sont semblables ou différents et représentent:

un atome d'hydrogène,

un radical alkyle linéaire ou ramifié comportant 1 à 6 atomes de carbone,

un radical alcoxy linéaire ou ramifié comportant 1 à 12 atomes de carbone,

un radical alcoxycarbonyle linéaire ou ramifié comportant 1 à 12 atomes de carbone,

un radical alkylsulfonyle linéaire ou ramifié comportant 1 à 12 atomes de carbone,

à la condition que, à l'exception de l'hydrogène ou du radical méthyle, pas plus de deux radicaux équivalents ne soient fixés dans un radical phénylène, ou que $X^1$ et $X^2$ ainsi que $Y^1$ et $Y^2$ forment conjointement un noyau de benzène condensé, les autres substituants $X^3$, $X^4$, $Y^3$ et $Y^4$ ayant la signification donnée ci-dessus, et

A représentent une atome d'azote ou un groupe N—O—,

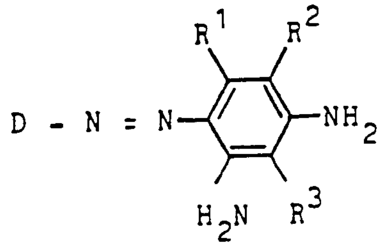

(II)

ou

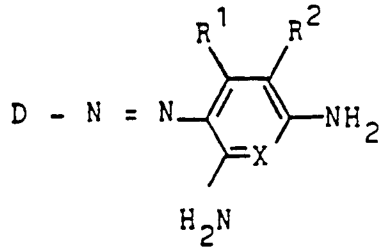

,

(III)

dans lesquelles les substituants $R^1$, $R^2$ et $R^3$ sont semblables ou différents et représentent:
un atome d'hydrogène,
un radical alkyle linéaire ou ramifié comportant 1 à 4 atomes de carbone,
un radical alkyle linéaire ou ramifié comportant 1 à 8 atomes de carbone,
ou un des radicaux $R^1$ à $R^3$,
un group phényle,
un radical cycloalkyle comportant 3 à 7 atomes de carbone,
un radical alcoxycarbonyle comportant 1 à 4 atomes de carbone,
un radical alkylcarbonyl comportant 1 à 4 atomes de carbone,
un radical benzoyle,
un radical carbamoyle,
un radical N-alkylcarbamoyle ou N,N-dialkylcarbamoyle comportant 1 à 4 atomes de carbone,
les aures radicaux $R^1$ à $R^3$ étant un atome d'hydrogène ou un radical alkyle ou alcoxy ayant la signification donnée précédemment,

D représente un radical aromatique de la série benzénique ou un radical hétérocyclique contenant du soufre et/ou de l'azote et

X représente de l'azote ou un groupe N—O—,
et on amène à réagir les composants précités à une température de 15 à 140°C en des quantités telles que le rapport entre les groupes NCO et les atoms d'hydrogène actifs de type Zerewitinoff, fixés sur des groupes OH—, $H_2N$— et RHN—, soit de 1/0,90 à 1,25.

2. Procédé suivant la revendication 1, caractérisé en ce que, comme diaminoazobenzènes (C), on utilise de diaminobenzènes de la formule II et/ou des 4,4'-diaminoazobenzènes de la formule I, qui sont substitués par des groupes alkyle ayant 1 à 2 atomes de carbone et/ou des groupes alcoxy ayant 1 à 2 atomes de carbone.

3. Procédé suivant l'une des revendications 1 et 2, caractérisé en ce que, comme diaminoazobenzènes (C), on utilise du 3-méthyl-4,4'-diaminoazobenzéne, du 3-méthoxy-4,4'-diaminoazobenzène et/ou du 3-éthoxy-4,4'-diaminoazobenzène.

4. Procédé suivant l'une des revendications 1 et 2, caractérisé en ce que, comme diaminoazobenzènes (C), on utilise du 2-méthyl-5-méthoxy-4,4'-diaminoazobenzene.

5. Procédé suivant l'une des revendications 1 et 2, caractérisé en ce que, comme diaminoazobenzènes (C), on utilise du 2,4-diaminoazobenzène et/ou du 2,4-diamino-4'-méthylazobenzène.

6. Procédé suivant l'une des revendications 1 à 2, caractérisé en ce que, comme catalyseur (E) pour la formation de polyurée à partir des diaminoazobenzènes et/ou des diaminoazopyridines et de polyisocyanates organiques, ou utilise de l'acide 4-méthoxybenzoïque en une quantité de 0,1 à 10% en poids, par rapport au poids des diamines.

7. Procédé suivant l'une des revendications 1 à 6, caractérisé en ce qu'on traite les composants selon la technique du moulage par injection pour former des corps moulés.

**Claims**

1. A process for the production of compact or cellular polyurethane-polyurea moldings by reacting
(A) an organic polyisocyanate,
(B) a polyol, and
(C) an aromatic diamine or a mixture of
(C) an aromatic diamine and
($D_1$) a chain extender, ($D_2$) a secondary aromatic diamine, an alkyl-substituted phenylenediamine and/or an alkyl-substituted 4,4'-diaminodiphenylmethane in the presence of (E) a catalyst and, if desired, a blowing agent, auxiliary and/or additive, which comprises using as the aromatic diamine (C):
a diaminoazobenzene or diaminoazopyridine of the formulae

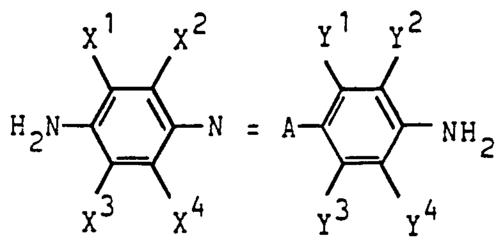

(I)

where $X^1$ to $X^4$ and $Y^1$ to $Y^4$ are identical or different and are
hydrogen,
linear or branched alkyl having from 1 to 6 carbon atoms,
linear or branched alkoxy having from 1 to 12 carbon atoms,
linear or branched alkoxy carbonyl having from 1 to 12 carbon atoms,
linear or branched alkyl sulfonyl having from 1 to 12 carbon atoms,
with the proviso that, with the exception of hydrogen or methyl, not more than two similar radicals are bonded in one phenylene radical, or

$X^1$ and $X^2$ and $Y^1$ and $Y^2$ together form a fused benzene ring, the other substituted $X^3$, $X^4$, $Y^3$ and $Y^4$ being as defined above, and

A is nitrogen or N—O,

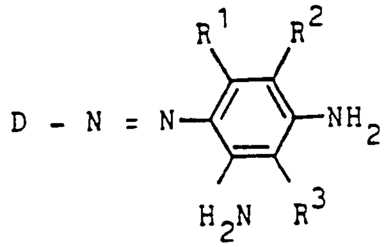

(II)

or

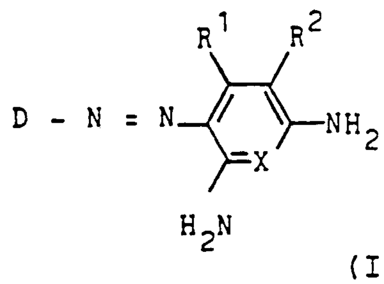

,

(III)

where $R^1$, $R^2$ and $R^3$ are identical or different and are hydrogen,
linear or branched alkyl having from 1 to 4 carbon atoms,
linear or branched alkoxy having from 1 to 8 carbon atoms,
or one of the radicals $R^1$ to $R^3$ is
phenyl,
cycloalkyl having from 3 to 7 carbon atoms,
alkoxycarbonyl having from 1 to 4 carbon atoms,
alkylcarbonyl having from 1 to 4 carbon atoms,
benzoyl,
carbamoyl,
N-alkyl- or N,N-dialkylcarbamoyl having from 1 to 4 carbon atoms,
the remaining radicals $R^1$ to $R^3$ being hydrogen, alkyl or alkoxy as defined above,

D is an aromatic radical from the benzene series or a sulfur- and/or nitrogen-containing heterocyclic radical, and

X is nitrogen or N—O,

and reacting the abovementioned starting components at from 15 to 140°C in such amounts that the ratio between NCO groups and Zerewitinoff-active hydrogen atoms, bonded to OH, $H_2N$ or RHN, is from 1:0.90 to 1.25.

2. A process as claimed in claim 1, wherein the diaminobenzene (C) used is a 4,4'-diaminoazobenzene of the formula I and/or diaminoazobenzene of the formula II, in each case substituted by alkyl having 1 or 2 carbon atoms and/or alkoxy having 1 or 2 carbon atoms.

3. A process as claimed in claim 1 or 2, wherein the diaminoazobenzene (C) used is 3-methyl-, 3-methoxy- and/or 3-ethoxy-4,4'-diaminoazobenzene.

4. A process as claimed in claim 1 or 2, wherein the diaminoazobenzene (C) used is 2-methyl-5-methoxy-4,4'-diaminoazobenzene.

5. A process as claimed in claim 1 or 2, wherein the diaminoazobenzene (C) used is 2,4-diamino-4'-methylazobenzene.

6. A process as claimed in claim 1 or 2 or 3 or 4 or 5, wherein the catalyst (E) used for the formation of polyurea from the diaminoazobenzene and/or pyridine and the organic polyisocyanate is 4-methoxybenzoic acid in an amount of from 0.1 to 10% by weight, based on the weight of the diamine.

7. A process as claimed in claim 1 or 2 or 3 or 4 or 5 or 6, wherein the starting components are molded by reaction injection molding.